# EUROPEAN PATENT APPLICATION

(11) **EP 3 288 103 A1**
(43) Date of publication of application: **28.02.2018**
(21) Application number: 16782583.5
(22) Date of filing: 15.04.2016
(51) Int. Cl.: H01M 4/139, H01M 4/1393, H01M 4/1391

(54) **METHOD FOR PREPARING NEGATIVE ELECTRODE MATERIAL OF LITHIUM-ION BATTERY BY USING BIOMASS GASIFICATION FURNACE FILTER RESIDUE**

(30) Priority: 21.04.2015 CN 201510190215
(71) Applicant: Wuhan Kaidi Engineering Technology Research Institute Co., Ltd., Wuhan, Hubei 430212 (CN)
(72) Inventor: ZHOU, Huanhuan, Wuhan Hubei 430212 (CN); CHENG, Yuting, Wuhan Hubei 430212 (CN)
(74) Representative: Zeuner Summerer Stütz
(86) International application number: PCT/CN2016/079380
(87) International publication number: WO 2016/169436

(57) **Abstract**

Disclosed is a method for preparing a negative electrode material of a lithium-ion battery by using a biomass gasification furnace filter residue. The method comprises: 1) mixing a biomass gasification furnace filter residue with a surface active agent and grinding the mixture, grinding the mixture adequately, removing the surface active agent in a water washing manner, carrying out the suction filtration, and obtaining the filter residue for standby use; 2) placing hydrochloric acid into the filter residue obtained in step 1), adequately removing impurities, and filtering and washing the filter residue to be neutral for standby use; 3) placing the filter residue obtained in step 2) into a mixed solution of polyethyleneimine and ethanol, carrying out the oscillation, washing the polyethyleneimine and the ethanol after the adequate oscillation, performing the filtering, and obtaining the filter residue for standby use; and 4) placing nitric acid having a mass fraction of 55% to 70% into the filter residue obtained in step 3), adequately stirring at the temperature of 35 to 45 degrees centigrade, carrying out the modification, washing the nitric acid, and filtering and drying to obtain a negative electrode material of a lithium-ion battery. The negative electrode material of the lithium-ion battery, which has a high capacity, a high primary efficiency and good cycling performance and is safe and pollution-free, is obtained; the process is simple in process flow, low in cost and applicable to the expanded production.

## Description

### FIELD OF THE INVENTION

The invention relates to a technique for producing lithium-ion battery materials, and more particularly to a method for preparing an anode material for lithium-ion batteries using residues from biomass gasifiers of biomass synthetic oil refineries.

### BACKGROUND OF THE INVENTION

Since lithium-ion batteries have the advantages such as high energy, high working voltage, low self discharge, wide operating temperature range, no memory effect, environmental protection and long service life, lithium-ion batteries are widely used in various fields including mobile phone, computer, digital camera, electric vehicle, hybrid power automobile, new energy automobile, ship dynamics and aerodynamics fields.

The anode materials for lithium-ion batteries have a great influence on the safety, cycle life and energy density of lithium-ion batteries. At present, the anode materials for lithium-ion batteries mainly are carbon materials, tin-based materials, silicon materials and lithium titanate. Due to the poor cycle stability of tin-based materials, the severe volume effect of silicon materials and the low capacity and high cost of lithium titanate, the commercial anode materials for lithium-ion batteries are mainly carbon materials. The carbon anode materials include natural graphite, artificial graphite, mesocarbon microbeads and hard carbon materials. Due to the higher capacity, good rate capability, good cycle performance and good safety performance of its irregular sequencing, hard carbon materials have become the hot research topic.

The common hard carbon materials mainly include resin carbon, pyrolytic carbon of organic polymers and carbon microbeads by hydrothermal synthesis. The main raw material sources of hard carbon materials are polymer compounds and fossil fuel asphalt. The hard carbon materials used as the anode materials for lithium-ion batteries have the following disadvantages that: (1) its polymer compound materials have a high cost and are prone to environmental pollution; and (2) the first-cycle coulombic efficiency of the hard carbon materials is lower.

### SUMMARY OF THE INVENTION

It is one objective of the invention to provide a method for preparing an anode material for lithium-ion batteries using residues from biomass gasifiers of biomass synthetic oil refineries. Through the method, economical, green and clean anode materials for lithium-ion batteries are prepared, and the resulting anode materials have a relatively high first-cycle coulombic efficiency.

To achieve the above objectives, in accordance with one embodiment of the invention, there is provided a method for preparing an anode material for lithium-ion batteries using a residue from a biomass gasifier, and the method comprising:
(1) mixing a raw residue from a biomass gasifier and an aqueous solution comprising a surfactant to yield a mixed solution, fully grinding the mixed solution to disperse the raw residue, washing the mixed solution using water to remove the surfactant, leaching the mixed solution and collecting a first intermediate residue for use;
(2) adding hydrochloric acid to the first intermediate residue obtained in (1), stirring to remove impurities, filtering, and washing the residue to be neutral, to yield a second intermediate residue for use;
(3) adding polyethyleneimine and ethanol to the second intermediate residue obtained in (2), shaking to disperse the second intermediate residue, washing away the polyethyleneimine and the ethanol, filtering, to yield a third intermediate residue for use; and
(4) adding nitric acid having a mass fraction of between 55% and 70% to the third intermediate residue obtained in (3), fully stirring at a temperature ranging between 35°C and 45°C for oxidation and modification, washing away the nitric acid, filtering and drying, to yield the anode material for lithium-ion batteries.

In a class of this embodiment, in (1), the surfactant is sodium dodecyl benzene sulfonate, 1-hexadecylsulfonic acid sodium salt, sodium dodecyl sulfate, sodium lauryl diphenyl ether disulfonate, sodium dodecyl aliphatate, Pluronic F-127, polyethylene oxide-polypropylene oxide-polyethylene oxide (P123), sorbitan oleate (span-80), or a mixture thereof.

In a class of this embodiment, in (1), according to a mass ratio, the raw residue: the surfactant: the water = 100: 0.5-5: 200-1000; and a grinding time is between 15min and 20 min.

In a class of this embodiment, in (2), a mass fraction of the hydrochloric acid is between 20% and 25%; and, according to a mass ratio, the first intermediate residue: the hydrochloric acid = 1: 8-20.

In a class of this embodiment, in (3), according to a mass ratio, the second intermediate residue: polyethyleneimine: ethanol = 10: 4-10: 200-1000 and a shaking time is between 0.5 h and 3 h.

In a class of this embodiment, in (4), according to a mass ratio, the third intermediate residue: nitric acid = 1: 5-15 and a stirring time is between 0.5 h and 3 h.

In a class of this embodiment, in (4), a grain size of the anode material for lithium-ion batteries ranges between 50 nm and 200 nm, and a specific surface area of the anode material for lithium-ion batteries is between 15 m²/g and 25 m²/g.

In a class of this embodiment, in (1), a grain size of the raw residue after being ground is between 5 µm and 20 µm.

In a class of this embodiment, in (1), the chemical compositions and mass percentage thereof of the raw residue are as follows: C: 65-70%, SiO₂: 13-18%, CaO: 3-6%, Al₂O₃: 4-7%, Fe₂O₃: 1-2%, Na₂O: 1-2%, K₂O: 1-2% and a minute amount of impurities comprising MgO and ZnO.

In a class of this embodiment, in (2), the first intermediate residue and the hydrochloric acid are stirred at a temperature of between 35 °C and 45 °C for between 0.5 h and 2 h.

Advantages of the method for preparing an anode material for lithium-ion batteries using residues according to embodiments of the present disclosure are summarized as follows:
1. The anode materials for lithium-ion batteries prepared by the invention have low ash content and small specific surface area, can reduce the boundary reaction during charge and discharge processes and have a small coulombic loss during the first charge. Due to the nanoscale sphere diameter, the anode materials for lithium-ion batteries can be closely piled to form high-density electrodes and the spherical arrangement is good for intercalation and de-intercalation of lithium ions.
2. In addition to hard carbon materials, the anode materials for lithium-ion batteries prepared by the invention also contain a small amount of SiO₂ powder. The existence of SiO₂ powder reduces the irreversible capacity during the first charge. However, the existence of SiO₂ powder reduces specific capacity. On the other hand, the micro structure of nanoscale carbon reduces the intercalation depth of lithium ions and shortens the intercalation process of lithium ions. The lithium ion can be intercalated between particle layers and in gaps between particles to improve the specific capacity of batteries, which just remedies the reduced specific capacity caused by the existence of SiO₂. For hard carbon materials, the larger irreversible capacity during the first charge is the main reason why lithium-ion batteries can't realize large-scale commercialization. The existence of SiO₂ powder of the invention remedies the shortcoming.
3. The anode materials for lithium-ion batteries prepared by the invention are hard carbon materials and are characterized by strong safety performance, good cycle performance (After 80 times of cycle, the capacity can still reach 72% of the initial capacity.) and high specific capacity (The initial specific capacity is 426 mAh/g). Since the pre-oxidation of the residues by HNO₃ the modification of the residues by the dopant N are conducted during the preparation and no other impurities are introduced, the first-cycle coulombic efficiency exceeds 80%. Compared to other hard carbon materials, the first-cycle coulombic efficiency is improved greatly. The obtained anode materials for lithium-ion batteries are characterized by high capacity, high first-cycle coulombic efficiency, good cycle performance and good rate capability and are safe and pollution-free.
4. The invention utilizes residues of biomass gasifiers of biomass synthetic oil refineries as materials to prepare anode materials for lithium-ion batteries. Since the residues have a high content of carbon and are spherical microscopically, the preparation process doesn't need complicate chemical synthesis but only need purification and modification steps. Therefore, the invention gets rid of complicate intermediate synthetic steps of traditional anode material preparing processes, saves chemical raw materials and has an advantage in price in the market.
5. The residue materials used by the invention are waste from chemical processes and are low in cost. The recycling can reduce environment pollution. The invention provides a clean renewable inexpensive new resource as raw materials for preparing hard carbon materials and an effective technical method to improve the first-cycle coulombic efficiency of hard carbon materials. The invention has a huge market advantage in terms of raw material sources, prices and product performance.

### BRIEF DESCRIPTION OF THE DRAWINGS

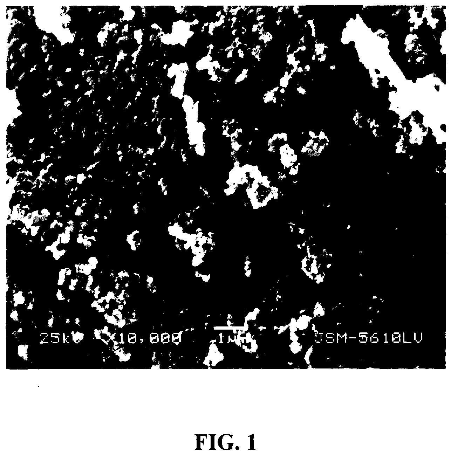

FIG 1 is a SEM image of a residue from a biomass gasifier.

### DETAILED DESCRIPTION OF THE EMBODIMENTS

For further illustrating the invention, experiments detailing a method for preparing an anode material for lithium-ion batteries using a residue from a biomass gasifier are described hereinbelow combined with the drawings. It should be noted that the following examples are intended to describe and not to limit the invention.

Residues in the embodiment are from a biomass gasifier of a biomass synthetic oil refinery. One source of the residues is detailed as follows: the ground biomass materials contact with reaction components in the gasifier, and then are taken out of the gasifier along with the gas products. The gas products are washed by water, and then the washing liquid is filtered to yield the residue. The chemical compositions and the mass ratios thereof of the residue are as follows: C: 65-70%, SiO₂: 13-18%, CaO: 3-6%, Al₂O₃: 4-7%, Fe₂O₃: 1-2%, Na₂O: 1-2%, K₂O: 1-2% and a minute amount of impurities including MgO and ZnO. As shown in FIG 1, the residue from the biomass gasifiers are spherical microscopically.

### Example 1

A method for preparing an anode material for lithium-ion batteries using a residue from a biomass gasifier comprises the following steps:
mixing a raw residue, 1-hexadecylsulfonic acid sodium salt and de-ionized water according to a mass ratio of the raw residue to the 1-hexadecylsulfonic acid sodium salt to the de-ionized water which is 100: 1: 500, putting the mixture of the raw residue, the 1-hexadecylsulfonic acid sodium salt and the de-ionized water to an agate mortar and grinding for 20 minutes, washing the mixture 3 times using de-ionized water to remove the 1-hexadecylsulfonic acid sodium salt, and filtering the mixture, to yield a first residue (intermediate product 1); adding hydrochloric acid with a mass fraction of 25% to the first residue (intermediate product 1) according to a mass ratio of the first residue (intermediate product 1) to the hydrochloric acid which is 1: 10, stirring the mixture of the first residue (intermediate product 1) and the hydrochloric acid in a closed constant-temperature magnetic stirrer at a temperature of 40°C for 40 minutes to remove impurities, filtering, washing the mixture 4 times until the pH value of the solution is neutral, to yield a second residue (intermediate product 2); then, putting the second residue (intermediate product 2) in an ultrasonic oscillator, adding polyethyleneimine and ethanol to the second residue (intermediate product 2) according to a mass ratio of the second residue (intermediate product 2) to polyethyleneimine to ethanol which is 10: 5: 500, fully shaking the mixture of the second residue (intermediate product 2), polyethyleneimine and ethanol for 1 hour, washing the mixture 3 times to remove polyethyleneimine and ethanol, filtering the mixture, to yield a third residue; finally, adding HNO₃ having a mass fraction of 65% according to a mass ratio of the third residue to nitric acid which is 1: 5, stirring the mixture of the third residue and HNO₃ in a closed environment at a temperature of 40°C for 30 minutes, fully washing the mixture 3 times, filtering and drying the mixture to obtain an anode material for lithium-ion batteries. Table **1** lists the performance parameters of the anode material for lithium-ion batteries.

### Example 2

A method for preparing an anode material for lithium-ion batteries using a residue from a biomass gasifier comprises the following steps:
mixing a raw residue, sodium dodecyl sulfate and de-ionized water according to a mass ratio of the raw residue to the 1-hexadecylsulfonic acid sodium salt to the de-ionized water which is 100: 2: 700, putting the mixture of the raw residue, the sodium dodecyl sulfate and the de-ionized water in an agate mortar and grinding for 40 minutes, washing the mixture 3 times using de-ionized water to remove the sodium dodecyl sulfate, and filtering the mixture, to yield a first residue (intermediate product 1); adding hydrochloric acid with a mass fraction of 20% to the first residue (intermediate product 1) according to a mass ratio of the first residue (intermediate product 1) to the hydrochloric acid which is 1: 20, stirring the mixture of the first residue (intermediate product 1) and the hydrochloric acid in a closed constant-temperature magnetic stirrer at a temperature of 40°C for one hour to remove impurities, filtering, washing the mixture 4 times until the pH value of the solution is neutral, to yield a second residue (intermediate product 2); then, putting the second residue (intermediate product 2) in an ultrasonic oscillator, adding polyethyleneimine and ethanol to the second residue (intermediate product 2) according to a mass ratio of the second residue (intermediate product 2) to polyethyleneimine to ethanol which is 10: 8: 1000, fully shaking the mixture of the second residue (intermediate product 2), polyethyleneimine and ethanol for 3 hours, washing the mixture 4 times to remove the polyethyleneimine and ethanol, filtering the mixture, to yield a third residue; finally, adding HNO₃ having a mass fraction of 55% according to a mass ratio of the third residue to nitric acid which is 1: 8, stirring the mixture of the third residue and HNO₃ in a closed environment at a temperature of 40°C for one hour, fully washing the mixture 4 times, filtering and drying the mixture to obtain an anode material for lithium-ion batteries. Table **1** lists the performance parameters of the anode material for lithium-ion batteries.

### Example 3

A method for preparing an anode material for lithium-ion batteries using a residue from a biomass gasifier comprises the following steps:
mixing a raw residue, sorbitan oleate (span-80) and de-ionized water according to a mass ratio of the raw residue to the sorbitan oleate (span-80) to the de-ionized water which is 100: 4: 1000, putting the mixture of the raw residue, the 1-hexadecylsulfonic acid sodium salt and the de-ionized water into an agate mortar and grinding for one hour, washing the mixture 3 times using de-ionized water to remove the sorbitan oleate (span-80), and filtering the mixture, to yield a first residue (intermediate product 1); adding hydrochloric acid with a mass fraction of 25% to the first residue (intermediate product 1) according to a mass ratio of the first residue (intermediate product 1) to the hydrochloric acid which is 1: 15, stirring the mixture of the first residue (intermediate product 1) and the hydrochloric acid in a closed constant-temperature magnetic stirrer at a temperature of 40°C for 1.5 hours to remove impurities, filtering, washing the mixture 4 times until the pH value of the solution is neutral, to yield a second residue (intermediate product 2); then, putting the second residue (intermediate product 2) in an ultrasonic oscillator, adding polyethyleneimine and ethanol to the second residue (intermediate product 2) according to a mass ratio of the second residue (intermediate product 2) to polyethyleneimine to ethanol which is 10: 4: 300, fully shaking the mixture of the second residue (intermediate product 2), polyethyleneimine and ethanol for 2 hours, washing the mixture 3 times to remove polyethyleneimine and ethanol, filtering the washed mixture, to yield a third residue; finally, adding HNO₃ having a mass fraction of 65% according to a mass ratio of the third residue to nitric acid which is 1: 15, stirring the mixture of the third residue and HNO₃ in a closed environment at a temperature of 40°C for 1.5 hours, fully washing the mixture 4 times, filtering and drying the washed mixture to obtain an anode material for lithium-ion batteries. Table 1 lists the performance parameters of the anode material for lithium-ion batteries.

**Table 1**

| Examples | | Grain size d50 (µm) | Tap density (g/ml) | Specific surface area (m²/g) | Discharge capacity (mAh/g) | Impurity content (%) | First-cycle coulombic efficiency (%) |
|---|---|---|---|---|---|---|---|
| 1 | | 0.41 | 0.82 | 16.1 | 308 | 0.37 | 82.5 |
| 2 | | 0.20 | 0.75 | 21.3 | 318 | 0.25 | 82.8 |
| 3 | | 0.29 | 0.80 | 18.7 | 291 | 0.28 | 81.3 |
| Prior art | BTR-CMB | 11-22 | 1.1-1.4 | 0.6-2.6 | 310-340 | - | - |
| | JFE-BAG-B2 | 10-20 | 1.1-1.45 | 0.5-2.5 | 354 | - | - |
| | CMS | 10-23 | 1.1-1.3 | 1.0-3.0 | 300-335 | - | - |

According to the performance parameters of the product of the invention and the current products, the anode materials for lithium-ion batteries prepared by the invention have the advantages that the specific capacity of the product of the invention is higher than the specific capacity of the current products, the grain size is nanoscale microspheres, the tap density is low, the content of impurities is low and the first-cycle coulombic efficiency is high. The anode materials for lithium-ion batteries prepared by the invention meet the requirements of electrode materials for lithium-ion batteries.

## Claims

1. A method for preparing an anode material for lithium-ion batteries, the method comprising:
(1) mixing a raw residue from a biomass gasifier and an aqueous solution comprising a surfactant to yield a mixed solution, grinding the mixed solution to disperse the raw residue, washing the mixed solution using water to remove the surfactant, leaching the mixed solution, to yield a first intermediate residue;
(2) adding hydrochloric acid to the first intermediate residue obtained in (1), stirring to remove impurities, filtering, and washing the residue to be neutral, to yield a second intermediate residue;
(3) adding polyethyleneimine and ethanol to the second intermediate residue obtained in (2), shaking to disperse the second intermediate residue, washing away the polyethyleneimine and the ethanol, filtering, to yield a third intermediate residue; and
(4) adding nitric acid having a mass fraction of between 55% and 70% to the third intermediate residue obtained in (3), fully stirring at a temperature of between 35°C and 45 °C for oxidation and modification, washing away the nitric acid, filtering and drying, to yield the anode material for lithium-ion batteries.

2. The method of claim 1, **characterized in that** in (1), the surfactant is sodium dodecyl benzene sulfonate, 1-hexadecylsulfonic acid sodium salt, sodium dodecyl sulfate, sodium lauryl diphenyl ether disulfonate, sodium dodecyl aliphatate, Pluronic F-127, polyethylene oxide-polypropylene oxide-polyethylene oxide (P123), sorbitan oleate (span-80), or a mixture thereof.

3. The method of claim 1 or 2, **characterized in that** in (1), according to a mass ratio, the raw residue: the surfactant: the water = 100: 0.5-5: 200-1000; and a grinding time is between 15 min and 20 min.

4. The method of claim 1 or 2, **characterized in that** in (2), a mass fraction of the hydrochloric acid is between 20% and 25%; and, according to a mass ratio, the first intermediate residue: the hydrochloric acid = 1: 8-20.

5. The method of claim 1 or 2, **characterized in that** in (3), according to a mass ratio, the second intermediate residue: the polyethyleneimine: the ethanol = 10: 4-10: 200-1000 and a shaking time is between 0.5 h and 3 h.

6. The method of claim 1 or 2, **characterized in that** in (4), according to a mass ratio, the third intermediate residue: the nitric acid = 1: 5-15 and a stirring time is between 0.5 h and 3 h.

7. The method of claim 1 or 2, **characterized in that** in (4), a grain size of the anode material for lithium-ion batteries ranges between 50 nm and 200 nm, and a specific surface area of the anode material for lithium-ion batteries is between 15 m²/g and 25 m²/g.

8. The method of claim 1 or 2, **characterized in that** in (1), a grain size of the raw residue after being ground is between 5 µm and 20 µm.

9. The method of claim 1 or 2, **characterized in that** in (1), chemical compositions and mass percentage thereof of the raw residue are as follows: C: 65-70%, SiO₂: 13-18%, CaO: 3-6%, Al₂O₃: 4-7%, Fe₂O₃: 1-2%, Na₂O: 1-2%, K₂O: 1-2%, and impurities comprising MgO and ZnO.

10. The method of claim 1 or 2, **characterized in that** in (2), the first intermediate residue and the hydrochloric acid are stirred at a temperature of between 35°C and 45 °C for between 0.5 h and 2 h.
